# EUROPÄISCHE PATENTSCHRIFT

(11) **EP 1 481 458 B1**
(45) Veröffentlichungstag und Bekanntmachung des Hinweises auf die Patenterteilung: **27.07.2005**
(21) Anmeldenummer: 03706474.8
(22) Anmeldetag: 11.02.2003
(51) Int. Cl.: H02K 5/128

(54) **LÜFTER MIT INTEGRIERTEM IP-SCHUTZ**
FAN HAVING AN INTEGRATED IP PROTECTION
VENTILATEUR COMPORTANT UNE PROTECTION IP INTEGREE

(30) Priorität: 02.03.2002 DE 20020421 U
(43) Veröffentlichungstag der Anmeldung: 01.12.2004
(73) Patentinhaber: ebm-papst St. Georgen GmbH & Co. KG, 78112 St. Georgen (DE)
(72) Erfinder: WEISSER, Michael, 78120 Furtwangen (DE)
(74) Vertreter: Raible, Tobias, Dipl.-Phys.
(86) Internationale Anmeldenummer: PCT/EP2003/001312
(87) Internationale Veröffentlichungsnummer: WO 2003/075433

(56) Entgegenhaltungen:
- EP-A- 1 108 280
- DE-A- 19 907 556
- DE-C- 4 342 649
- DE-U- 20 012 673
- US-A- 3 588 284
- US-A- 5 946 161
- US-A- 6 126 417

## Beschreibung

Die Schutzarten von elektrischen Maschinen werden mit Abkürzungen angegeben, z.B. Schutzart IP 23, bei der ein Schutz gegen Sprühwasser aus senkrechter oder schräger Richtung verlangt wird, oder Schutzart IP 44, wo Schutz gegen Spritzwasser aus allen Richtungen gefordert wird. Die Erfindung betrifft einen Lüfter, welcher für höhere Schutzarten geeignet ist.

Ein Lüfter hat meist ein Lüftergehäuse mit integrierten Verstärkungsrippen, einen Flansch mit darin angeordneten Lagern, eine Haltevorrichtung für die Rotorwelle, sowie einen Stator mit angeflanschter Leiterplatte. Aus der DE 200 12 673 U1 ist bekannt, dass solch ein Lüfter im wesentlichen einen Stator, ein Blechpaket, eine Wicklung, ein Statorrohr, sowie eine Leiterplatte und einen Rotor aufweist. Der Rotor besteht im wesentlichen aus einem Rotormagneten, einer Rotorglocke, an der Lüfterflügel angebracht sind, und einer Rotornabe.

Bei Elektromotoren, die in sogenannten Reinräumen, in feuchter und aggressiver Umgebung eingesetzt werden, ist es erforderlich, die empfindlichen Teile eines Motors, wie beispielsweise die Wicklung und die Leiterplatte, mit einer Schutzschicht zu versehen, um hohe Isolations- und Schutzbedingungen zu erfüllen, d.h. ein solcher Lüfter muss eine bestimmte Schutzart haben, je nach Anwendung.

So ist zum Beispiel aus der WO98/19382 bekannt, den Stator eines Elektromotors mit Kunstharz zu umgießen. Die Aufgabe bei dieser Veröffentlichung besteht im wesentlichen darin, die Verbindung zwischen Stator und Leiterplatte einfacher zu gestalten. Verfahren zur Erzeugung einer solchen Schutzschicht, wie Tauchen, Fluten, Vakuumimprägnieren, Vakuum-Druckimprägnieren, Träufeln, sind aus dem Stand der Technik bekannt.

Desweiteren ist es bekannt, dass diese Verfahren nicht nur eine mechanische Nacharbeit erfordern, sondern sie sind auch nicht in der Lage, die Bedingungen höherer Schutzarten zu erfüllen.

Aufgabe der Erfindung ist es, eine Anordnung eines Lüfters bereitzustellen, welche einen integrierten IP-Schutz, bevorzugt auch für höhere Isolations- und Schutzbestimmungen, zulässt.

Nach der Erfindung wird diese Aufgabe gelöst durch den Gegenstand des Anspruches 1. Ein solcher Lüfter verbindet einfache Montage und kostengünstige, umweltbewusste Produktion mit sicherer Funktion, auch bei erschwerten Umweltbedingungen, und es ergeben sich kurze Zykluszeiten bei seiner Herstellung.

Weitere Vorteile und Merkmale der vorliegenden Erfindung ergeben sich aus den im folgenden beschriebenen und in den Zeichnungen dargestellten Ausführungsbeispielen, sowie aus den Unteransprüchen. Es zeigen:
- Fig. 1:: Draufsicht auf ein Lüftergehäuse einer ersten Ausführungsform der Erfindung, gesehen in Richtung I der Fig. 2,
- Fig. 2:: einen Schnitt, gesehen längs der Linie II - II der Fig. 1,
- Fig. 3:: eine Vergrößerung der Einzelheit III der Fig. 2,
- Fig. 4:: Draufsicht auf einen Flansch, gesehen in Richtung IV der Fig. 5,
- Fig. 5:: einen Schnitt, gesehen längs der Linie V - V der Fig. 4,
- Fig. 6:: einen Schnitt durch einen Flansch mit aufgesetztem Stator,
- Fig. 7:: einen Schnitt durch einen kompletten Lüfter gemäß der ersten Ausführungsform der Erfindung,
- Fig. 8:: eine Vergrößerung der Einzelheit VIII der Fig. 7,
- Fig. 9:: Draufsicht auf ein Lüftergehäuse mit einer Schutzhaube, nach einer zweiten Ausführungsform der Erfindung, gesehen in Richtung IX der Fig. 10,
- Fig. 10:: einen Schnitt, gesehen längs der Linie X - X der Fig. 9,
- Fig. 11:: Draufsicht auf eine Abdeckkappe, gesehen in Richtung XI der Fig. 12, und
- Fig. 12:: einen Schnitt, gesehen längs der Linie XII - XII der Fig. 11.

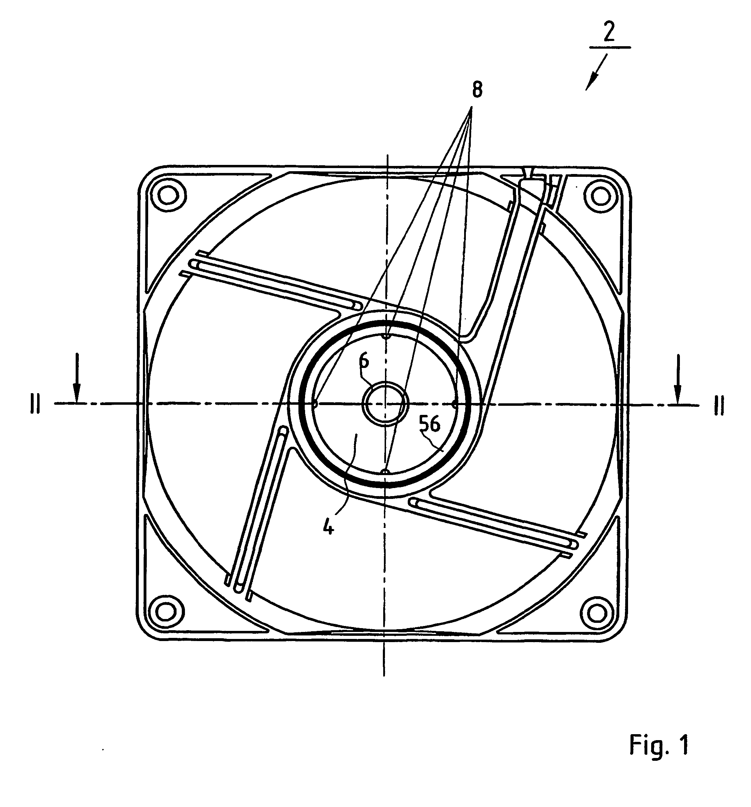

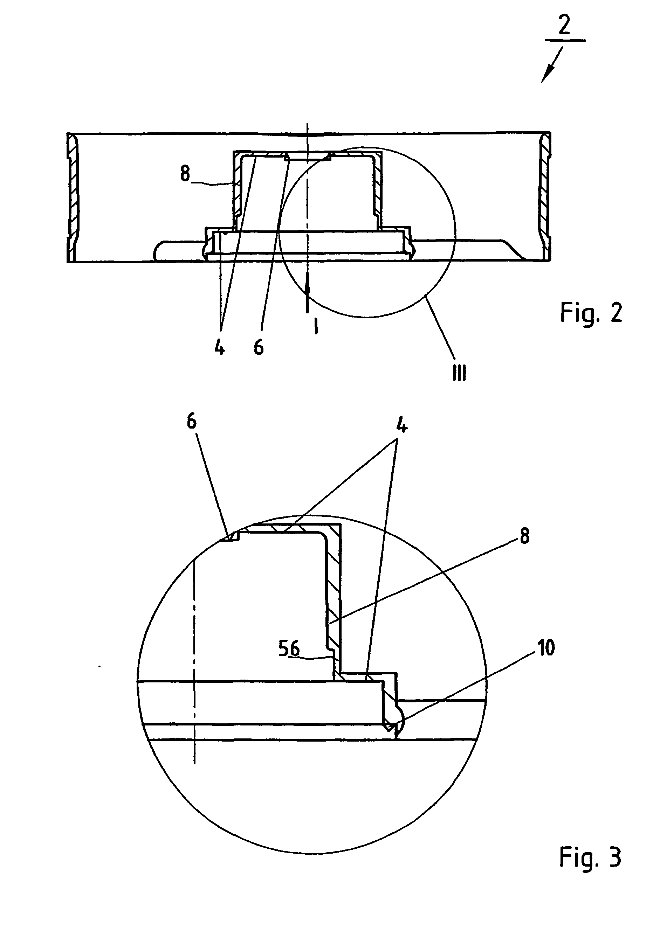

Die **Fig. 1** und **Fig. 2** zeigen ein Lüftergehäuse 2 eines Lüfters. Hierbei weist das Lüftergehäuse 2 auf der Rückseite mehrere, im wesentlichen rund ausgebildete, und in unterschiedlichen Absätzen angebrachte topfartige Ausnehmungen 4 auf, vgl.

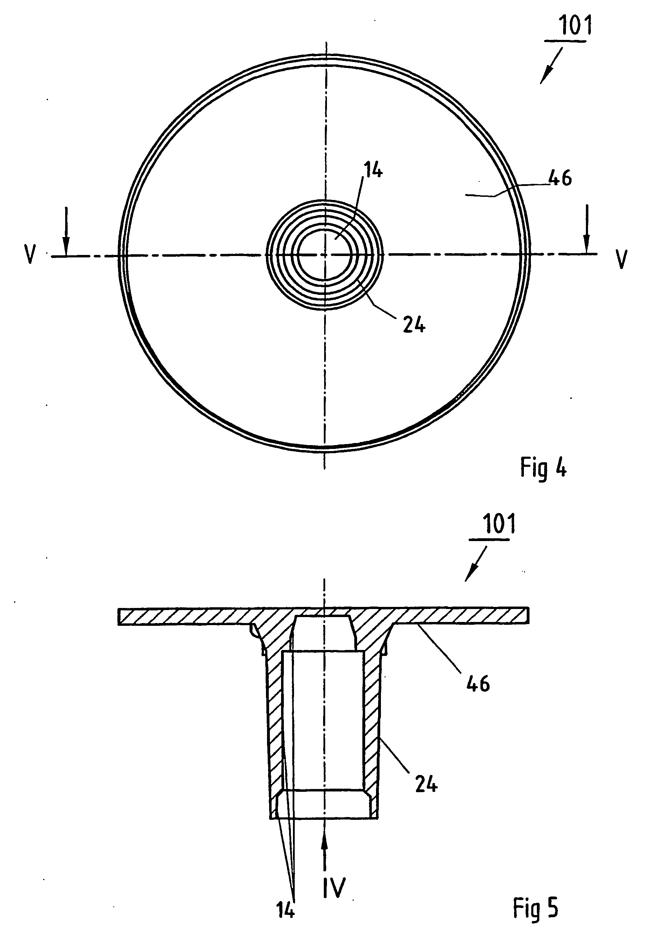

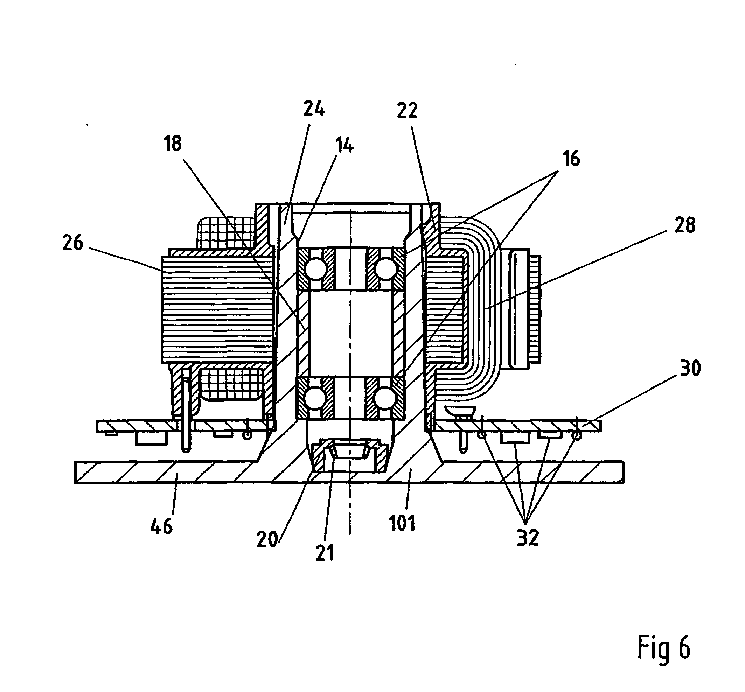

Fig. 2 und 3, deren Wand mit 56 bezeichnet ist. Die dabei entstandenen Absätze sind fest mit den äußeren Abschnitten des Lüftergehäuses 2 verbunden. Zusätzlich optional angebrachte Verstärkungsrippen 8 erhöhen die Steifigkeit der topfartigen Ausnehmungen 4 und garantieren einen wackelfreien Sitz eines Statorflansches 101 (Fig. 5 & 6) im Lüftergehäuse 2. Innerhalb der tiefsten topfartigen Ausnehmung 4 befindet sich, zentrisch angeordnet, eine im wesentlichen rund ausgebildete Erhöhung 6. Sie dient zur Positionierung und Fixierung des Statorflansches 101, vgl. Fig. 6. Zusätzlich befindet sich eine Schweißraupe 10 auf der Oberseite einer der im wesentlichen rund ausgebildeten topfartigen Ausnehmungen 4, vgl. Fig. 3. Ihr Zweck ergibt sich aus der nachfolgenden Beschreibung.

**Fig. 4** und **Fig. 5** zeigen einen Flansch 101 im unbestückten Zustand. Hierbei weist der im wesentlich rund ausgebildete Flansch 101 mehrere, im wesentlich rund ausgebildete, konzentrisch angeordnete Ausnehmungen 14, ein im wesentlichen zylindrisches Lagertragrohr 24 und ein Basisteil 46 auf. Letzteres ist als runde Platte oder Scheibe ohne Durchbrechung ausgebildet, d.h. die Ausnehmungen 14 sind wie dargestellt nach Art einer Sackbohrung ausgebildet.

Der Flansch 101 (Fig. 5) besteht vorzugsweise aus Kunststoff, zum Beispiel aus Polyamid mit 30% glasfaserverstärktem Kunststoff, kann jedoch auch aus anderen Materialien wie zum Beispiel Aluminium, Stahl, etc. hergestellt sein. In diesen Flansch 101 wird eine Halteklammer 20 eingelegt, deren Außenform an die Form der Ausnehmung 14 in der dargestellten Weise angepasst ist und die, wie dargestellt, mit Rasthaken 21 versehen ist. Dann werden die Kugellager 16 und das Distanzstück 18 eingepresst.

Daraufhin wird gemäß **Fig. 6** ein Stator 22 auf das Lagertragrohr 24 bis zu einer bestimmten festgelegten Endlage aufgeschoben. Die Befestigung des Stators 22 kann durch Kleben oder Pressen in der erforderlichen Endlage erfolgen. Jedoch sind auch andere Befestigungs- und Arretierungsmethoden, wie zum Beispiel Clipsen, mittels Rasthaken, etc. möglich. Dadurch, dass die Bestückung des Flansches 101 mit den Kugellagern 16, dem Distanzstück 18, der Halteklammer 20, dem Stator 22, und nachfolgend dem Rotor 34, von derselben Seite aus erfolgt, nämlich in Fig. 6 von oben, ergeben sich bei der Montage erhebliche Automatisierungsvorteile.

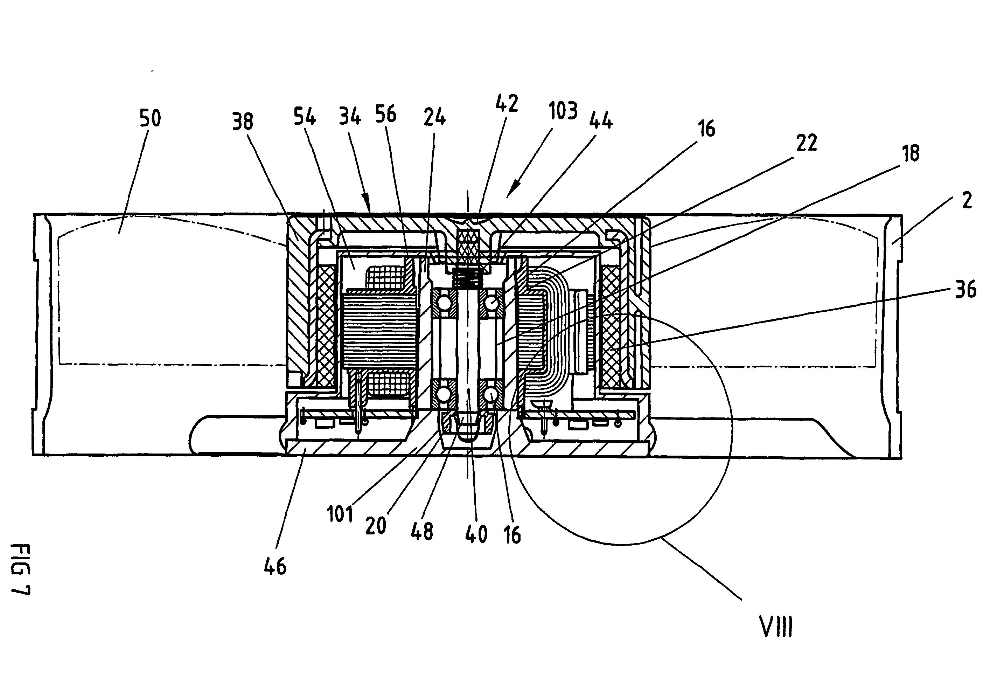

Der komplett bestückte Flansch 101 gemäß Fig. 6 wird daraufhin in die Rückseite des Lüftergehäuses 2 geschoben. Die Positionierung und Zentrierung des Flansches 101 erfolgt hierbei durch die Erhöhung 6 (Fig. 2 und 3), welche sich innerhalb der konzentrisch angeordneten topfartigen Ausnehmungen 4 der Fig. 2 befindet. Hierbei greift eine der Ausnehmungen 14 (Fig. 5), des Lagertragrohres 24 der Fig. 6 in die Erhöhung 6 ein, vgl. Fig. 7.

In Fig. 6 ist im Schnitt der Flansch 101 im bestückten Zustand dargestellt. Dieser Flansch 101 weist hierbei innerhalb der Ausnehmungen 14 die zwei Kugellager 16, das Distanzstück 18, sowie die Halteklammer 20 auf. Der Stator 22 wird separat auf das im Querschnitt im wesentlichen rund ausgebildete Lagertragrohr 24 aufgesteckt. Dieser Stator 22 besteht im wesentlichen aus einem Blechpaket 26, einer Wicklung 28 und einer Leiterplatte 30. Auf der Leiterplatte 30 befinden sich elektronische Bauteile 32, die durch Feuchtigkeit und aggressive Medien, wie zum Beispiel salzhaltige Luft, zerstört werden könnten.

**Fig. 7** zeigt im Schnitt den Zusammenbau eines Lüfters gemäß dem ersten Ausführungsbeispiel der Erfindung. Hierbei besteht der Lüfter aus dem Lüftergehäuse 2, dem komplett bestückten Flansch 101 mit den Kugellagern 16, dem Distanzstück 18, der Halteklammer 20, und einem elektronisch kommutierten Außenläufermotor (ECM) 103. Dieser besteht im wesentlichen aus dem Stator 22 und einem Rotor 34. Dieser Rotor 34 besteht im wesentlichen aus einem Rotormagnet 36, einer Rotorglocke 38, einer fest mit der Rotorglocke verankerten Rotorwelle 40, sowie einer Rotornabe 42. Der Rotor 34 ist im wesentlichen in einem magnetischen Gleichgewichtszustand relativ zum Statorblechpaket 26 angeordnet, um eine in Achsrichtung wirkende magnetische Kraft zwischen Rotor 34 und Stator 22 zu reduzieren oder zu vermeiden.

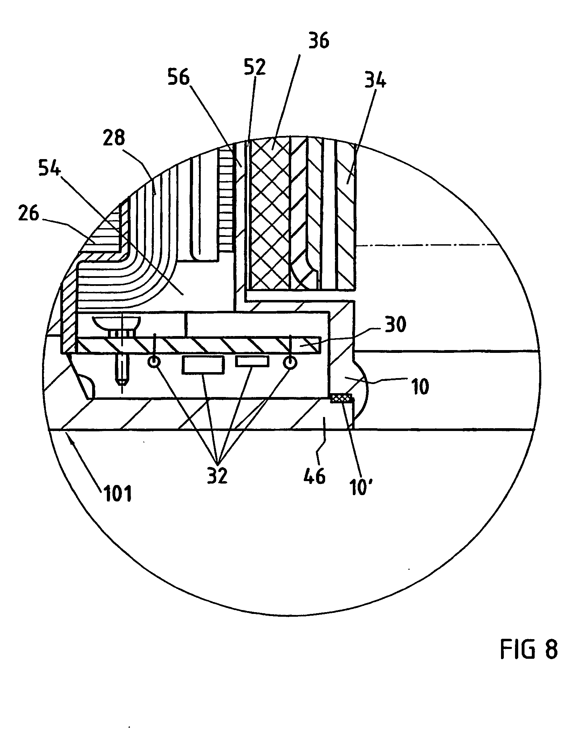

**Fig. 8** zeigt, stark vergrößert, wie der Wandabschnitt 56 der topfartigen Ausnehmung 4 nach Art eines Spaltrohres im Luftspalt 52 angeordnet ist und den Stator 22 vom Rotor 34 isoliert.

Der vormontierte Flansch 101 wird bei der Montage so weit in die Rückseite des Lüftergehäuses 2 geschoben, bis das Basisteil 46 des Flansches 101 auf der Schweißraupe 10 aufliegt, wie das in Fig. 8 dargestellt ist.

Das Lüftergehäuse 2 mit eingebautem Flansch 46 wird daraufhin durch eine Ultraschall - Schweißanlage geführt. In dieser wird gezielt die Schweißraupe 10 erhitzt und zum Schmelzen gebracht. Durch das Eigengewicht des Flansches 46 oder durch zusätzlichen Druck auf den Flansch nimmt dieser seine endgültige Position auf der Rückseite des Lüftergehäuses 2 ein. Nach dem Erstarren der geschmolzenen Schweißraupe 10' (Fig. 8) ist das Basisteil 46 des Flansch 101 fluiddicht und fest mit der Rückseite des Lüftergehäuse 2 verbunden. Der Flansch 101 kann auch geklebt, gepresst oder durch anderweitige Verfahren auf der Rückseite des Lüftergehäuses 2 befestigt werden. Das Befestigungsverfahren des Flansches 101 richtet sich jeweils nach dem verwendeten Werkstoff des Lüftergehäuses und des Flansches.

Auf der gegenüber liegenden Seite der Gehäuserückwand des Lüftergehäuses 2 wird zentrisch eine Ausgleichsfeder 44 eingelegt, vgl. Fig. 7. Die Rotorglocke 38 mit Rotormagnet 36 und fest verankerter Rotorwelle 40 wird anschließend in das Gehäuse eingeführt. Hierbei wird die Ausgleichsfeder 44 zusammengedrückt und die Welle 40 soweit eingeführt, bis die Rasthaken 21 des Halteglieds 20 in eine umlaufende Nut 48 der Rotorwelle 40 eingreifen. Die Rotorwelle 40 und die damit verbundene Rotorglocke 38 mit aufgespritzten Lüfterflügeln 50 sind somit axial relativ zum Stator 22 gesichert. Die Ausgleichsfeder 44 dient zum Ausgleich eines axialen Spieles zwischen Rotor 34 und Stator 22, zur Montage in der dargestellten Art, und zur Verspannung der Kugellager 16.

Beim ersten Ausführungsbeispiel ist also der Stator 22 einschließlich der Leiterplatte 30 auf seiner in Fig. 6 und 7 oberen Seite von der topfartigen Ausnehmung 4 umschlossen, deren Wand 56 sich durch den Luftspalt 52 erstreckt, Vgl. Fig. 8, und einen den Innenstator 22 umschließenden Ringraum 54 bildet. Die Ausnehmung 4 ist an ihrem offenen Ende fluiddicht mit dem Flanschteil 46 verbunden, wie das in Fig. 8 dargestellt ist. Das in Fig. 6 und 7 obere Ende des Lagertragrohres (24), dessen unteres Ende verschlossen ist, bildet eine Verbindung mit dem Vorsprung 6 der topfartigen Ausnehmung 4, und die Welle 40 ist durch diesen Vorsprung 6 hindurch geführt. Hierdurch erhält man eine preiswerte Isolation des Stators 22 mit sehr guten Eigenschaften.

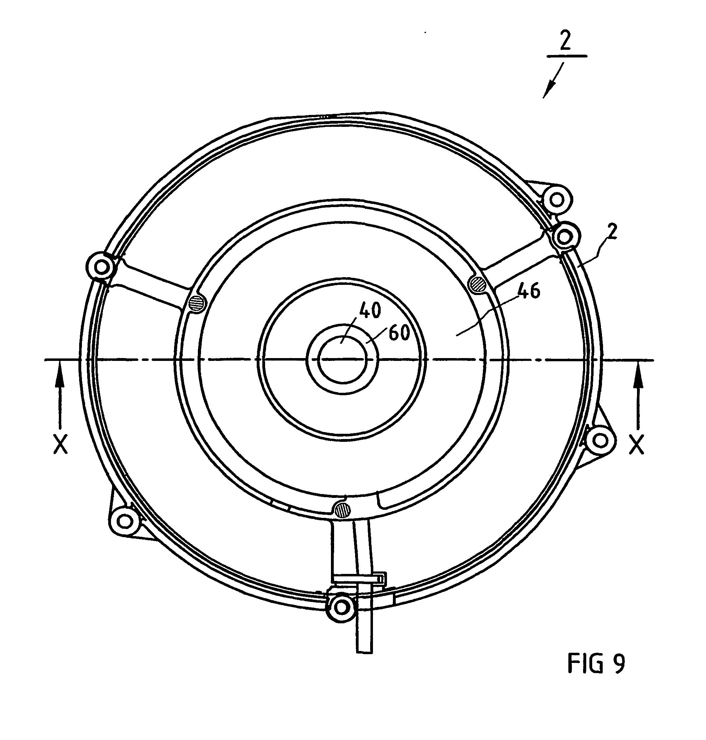

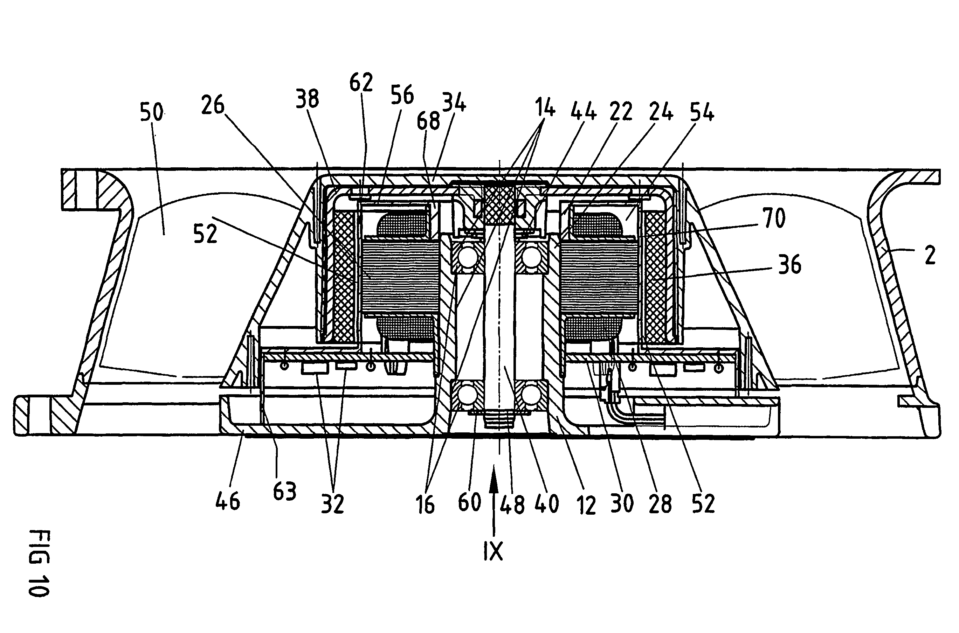

**Fig. 9** bis **Fig. 12** zeigen eine zweite Ausführungsvariante für einen Lüfter mit integriertem IP ― Schutz. Für gleiche oder gleich wirkende Teile wie in Fig. 1 werden dieselben Bezugszeichen verwendet. Der Lüfter hat ein Lüftergehäuse 2 mit angespritztem Flansch 12, vgl. Fig. 10. Dieser Flansch 12 besteht im wesentlichen aus einem Basisteil 46 und einem Lagertragrohr 24, sowie einer oder mehreren zentrisch angeordneten Ausnehmungen 14. In das Lagertragrohr 24 werden, wie dargestellt, Kugellager 16 eingepresst. Anschließend wird der Stator 22 komplett mit dem Blechpaket 26, der Wicklung 28 und der Leiterplatte 30 inklusive den elektronischen Bauteilen 32 auf das Lagertragrohr 24 geschoben. Der Stator 22 wird solange auf das Lagertragrohr 24 geschoben, bis er eine bestimmte festgelegte Endposition erreicht hat. In dieser Endposition wird der Stator 22 durch Verpressen, Kleben oder andere Befestigungsmöglichkeiten auf dem Lagertragrohr 24 arretiert.

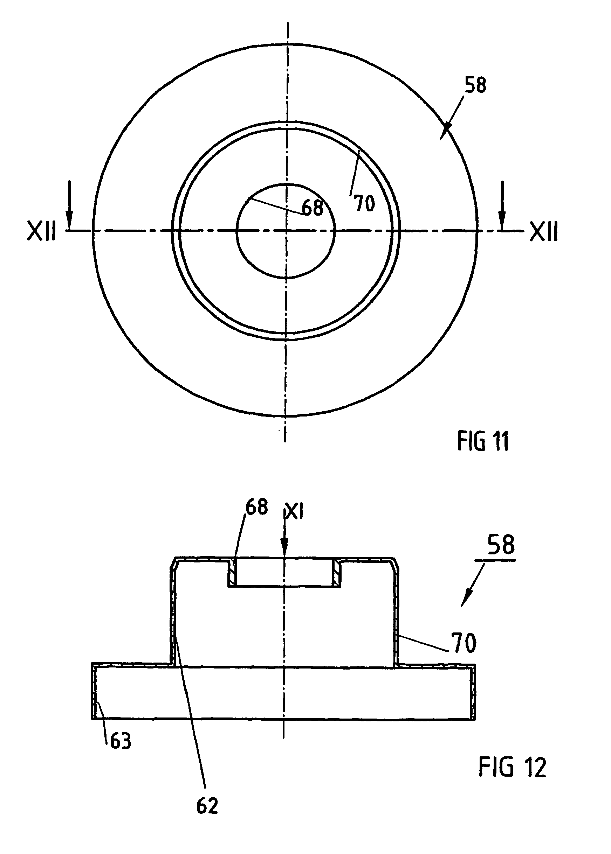

Darauffolgend wird eine Abdeckkappe 58 (Fig. 11 und 12), die im wesentlichen rund ausgebildet ist, über den Stator 22 gestülpt. Die Abdeckkappe 58 liegt nach dem Überstülpen über den Stator 22 auf dem Basisteil 46 des Flansches 12 auf, vgl. Fig. 10, und wird in dieser Endposition mit dem Lüftergehäuse 2, z.B. durch Verkleben, verbunden. Hierbei bildet die Abdeckkappe 58 zusammen mit dem Lüftergehäuse 2 eine fluiddichte Verbindung. Anschließend wird zentrisch, gegenüber der Lüftergehäuse-Rückwand, eine Ausgleichsfeder 44 eingelegt. Eine Rotorglocke 38 mit Rotormagnet 36 und fest verankerter Rotorwelle 40 wird anschließend in das Gehäuse eingeführt. Hierbei wird die Ausgleichsfeder 44 zusammengedrückt und die Welle 40 wird so weit in das Lagertragrohr 24 eingeführt, bis eine umlaufende Nut 48 der Rotorwelle 40 auf der Rückseite des Lüftergehäuses 2 sichtbar wird. Darauffolgend wird ein Sicherungsring 60 in die umlaufende Nut 48 der Rotorwelle 40 eingelegt. Die Rotorwelle 40 und die damit verbundene Rotorglocke 38 mit angespritzten Lüfterflügeln 50 sind somit axial relativ zum Stator 22 gesichert. Die Ausgleichsfeder 44 dient somit zum Ausgleich eines axialen Spieles zwischen Rotor 34 und Stator 22 und verspannt die Kugellager 16 relativ zueinander. Nach der Montage wird die Öffnung des Lagertragrohres 24 in der dargestellten Weise verschlossen, z.B. durch ein Typenschild.

**Fig. 11** und **Fig. 12** zeigen die stirnseitig geöffnete Abdeckkappe 58. Diese weist hierbei eine oder auch mehrere zentrisch angeordnete, im wesentlichen rund ausgebildete, topfartige Ausnehmungen 62 auf. Zudem befindet sich mittig eine mit einem Kragen versehene Durchgangsöffnung 68, welche es ermöglicht, dass nach dem Zusammenbau des Lüfters die Rotorwelle 40 durch das Gehäuse geführt werden kann. In diesen Kragen der Ausnehmung 68 ragt, wie in Fig. 10 dargestellt, das freie Ende des Lagertragrohres 24 und bildet dadurch eine Abdichtung. Ein zylindrischer Abschnitt 70 der Abdeckkappe 58 erstreckt sich nach Art eines Spaltrohres durch den Luftspalt 52 des Motors, vgl. Fig. 10.

Der Vorteil dieser Erfindung liegt darin, dass mit dieser Anordnung kostengünstig und umweltbewusst produziert werden kann. Hierfür sprechen die enormen Material- und Zeiteinsparungen, sowie die kurzen Zykluszeiten bei der Herstellung. Zudem werden bei der Herstellung von Statoren, und dem damit verbundenen erforderlichen IP-Schutz, keine PUR-Umgüsse und Werkzeuge benötigt. Fehler wie Lunker, Risse und Blasen, die bei den bekannten Methoden auftreten, werden vermieden. Eine zeitaufwändige Nacharbeit entfällt somit. Zudem ist dieses Verfahren für Großserien bestens geeignet, da schnell und effizient auf verschiedene Varianten umgestellt werden kann.

Die Erfindung ist nicht auf die dargestellten und beschriebenen Ausführungsbeispiele beschränkt, sondern umfasst auch alle im Sinne der Erfindung gleich wirkenden Ausführungen.

## Patentansprüche

1. Lüfter, insbesondere Gerätelüfter, welcher aufweist:
Einen Außenläufer-Antriebsmotor (103), welcher einen Innenstator (22) und
einen von diesem durch einen Luftspalt (52) getrennten Außenrotor (34) aufweist;
ein mit einem Basisteil (46) verbundenes Lagertragrohr (24), auf welchem der Innenstator (22) angeordnet ist;
ein topfartiges Teil (4, 56; 58, 70), welches
• an einem Ende mit dem Basisteil (46) verbunden ist,
• einen den Innenstator (22) im wesentlichen fluiddicht umschließenden Ringraum (54) bildet,
• sich mit einer Wand (56; 70) nach Art eines Spaltrohres durch den Luftspalt (52) zwischen Innenstator (22) und Außenrotor (34) erstreckt, und
• an seinem anderen Ende mit dem vom Basisteil (46) abgewandten Ende des Lagertragrohres (24) im wesentlichen fluiddicht verbunden ist.

2. Lüfter nach Anspruch 1, bei welchem das andere Ende mit dem vom Basisteil (46) abgewandten Ende des Lagertragrohres (24) durch eine Steckverbindung im wesentlichen fluiddicht verbunden ist.

3. Lüfter nach Anspruch 1 oder 2, bei welchem das Basisteil (46) im wesentlichen fluiddicht mit dem Lüftergehäuse (2) verbunden (10') ist.

4. Lüfter nach einem oder mehreren der vorhergehenden Ansprüche, bei welchem das Basisteil (46) durch Ultraschallschweißen (10') fluiddicht mit dem Lüftergehäuse (2) verbunden ist.

5. Lüfter nach einem oder mehreren der vorhergehenden Ansprüche, bei welchem das topfartige Teil (4; 56) eine Schweißraupe (10) zum Herstellen einer Schweißverbindung aufweist.

6. Lüfter nach einem oder mehreren der vorhergehenden Ansprüche, bei welchem im Lagertragrohr (24) eine Ausnehmung (14) vorgesehen ist, in welcher ein Distanzstück (18), ein zum Festhalten der Welle (44) bestimmtes Halteglied (20), und eine Mehrzahl von Wälzlagern (16) vorgesehen sind.

7. Lüfter nach Anspruch 6, bei welchem die Ausnehmung (14) des Lagertragrohres (24) nach Art eines Sacklochs (14) ausgebildet ist.

8. Lüfter nach Anspruch 6 oder 7, bei welchem die Ausnehmung (14) des Lagertragrohres (24) an ihrem verschlossenen Ende so ausgebildet ist, dass sie ein dort angeordnetes Halteglied (20) in radialer Richtung im wesentlichen führt (Fig. 6).

9. Lüfter nach einem der Ansprüche 6 bis 9, bei welchem der Rotor als Außenrotor (34) mit einer Rotorglocke (39) ausgebildet ist, an welcher eine Rotorwelle (40) befestigt ist,
und zwischen dieser Rotorglocke (38) und dem Innenring eines der Wälzlager (16) eine Druckfeder (44) vorgesehen ist, welche bei der Montage zusammenpressbar ist, um ein Einrasten des in der Ausnehmung (14) des Lagertragrohres (24) angeordneten Halteglieds (20) in einer an der Rotorwelle (44) vorgesehenen Ringnut (48) zu ermöglichen.

10. Lüfter nach Anspruch 9, bei welchem das Halteglied (20) mindestens einen Rasthaken (21) aufweist, welcher im montierten Zustand in die an der Rotorwelle (44) vorgesehene Ringnut (48) eingreift.

11. Lüfter nach einem oder mehreren der vorhergehenden Ansprüche, bei welchem der Motor als elektronisch kommutierter Außenläufermotor (103) ausgebildet ist, dessen Rotor (34) einen Rotormagneten (36) aufweist, und der einen Stator (22) mit einem Statorblechpaket (26) aufweist, welcher Stator sich mindestens bereichsweise radial innerhalb des Rotormagneten (36) befindet.

12. Lüfter nach Anspruch 11, bei welchem der Rotor (34) im wesentlichen in einem magnetischen Gleichgewichtszustand relativ zum Statorblechpaket (26) angeordnet ist, um eine in Achsrichtung wirkende magnetische Kraft zwischen Rotor (34) und Stator (22) zu reduzieren oder zu vermeiden.

13. Lüfter nach einem der vorhergehenden Ansprüche, bei welchem das topfartige Teil (6; 56) einstückig mit dem Gehäuse (2) des Lüfters ausgebildet ist.

14. Lüfter nach einem der Ansprüche 1 bis 12, bei welchem das mit dem Lagertragrohr (24) verbundene Basisteil (46) einstückig mit dem Gehäuse (2) des Lüfters ausgebildet ist.

15. Lüfter nach nach einem der vorhergehenden Ansprüche, bei welchem der fluiddichte Abschluss zwischen topfartigem Teil (58, 70) und Basisteil (46) durch Kleben, Verschweißen oder andere gängige Verbindungsmethoden erfolgt.

16. Lüfter nach einem der vorhergehenden Ansprüche, bei welchem der Rotor (34) eine Welle (40) aufweist, welche axial durch einen Sicherungsring (60) gesichert ist, der in eine umlaufenden Nut (48) der Welle (40) eingreift.

## Claims

1. Fan, in particular equipment fan, which comprises:
an external-rotor driving motor (103) which comprises an internal stator (22) and an external rotor (34) which is separated from the latter by an air gap (52);
a bearing supporting tube (24) which is connected to a base part (46) and on which the internal stator (22) is arranged;
a pot-like part (4, 56; 58, 70) which
• is connected at one end to the base part (46),
• forms an annular space (54) which surrounds the internal stator (22) in an essentially fluid-tight manner,
• extends with a wall (56; 70) in the manner of a dividing tube through the air gap (52) between the internal stator (22) and the external rotor (34), and
• is connected at its other end to the end of the bearing supporting tube (24) remote from the base part (46) in an essentially fluid-tight manner.

2. Fan according to claim 1, wherein the other end is connected to the end of the bearing supporting tube (24) remote from the base part (46) by a plug-in connection in an essentially fluid-tight manner.

3. Fan according to claim 1 or 2, wherein the base part (46) is connected (10') to the fan housing (2) in an essentially fluid-tight manner.

4. Fan according to one or more of the preceding claims, wherein the base part (46) is connected to the fan housing (2) in a fluid-tight manner by ultrasonic welding (10').

5. Fan according to one or more of the preceding claims, wherein the pot-like part (4; 56) comprises a welding bead (10) for producing a welded joint.

6. Fan according to one or more of the preceding claims, wherein a recess (14) is provided in the bearing supporting tube (24) in which are provided a spacer (18), a retaining member (20) designed to hold the shaft (44) securely, and a plurality of roller bearings (16).

7. Fan according to claim 6, wherein the recess (14) of the bearing supporting tube (24) is formed in the manner of a blind hole (14).

8. Fan according to claim 6 or 7, wherein the recess (14) of the bearing supporting tube (24) is formed at its closed end so that it essentially guides (fig. 6) a retaining member (20) arranged there in the radial direction.

9. Fan according to one of claims 6 to 9, wherein the rotor is embodied as an external rotor (34) with a rotor bell (39) to which a rotor shaft (40) is fastened, and a compression spring (44) is provided between this rotor bell (38) and the internal ring of one of the roller bearings (16), which compression spring can be compressed during assembly in order to allow engagement of the retaining member (20) arranged in the recess (14) of the bearing supporting tube (24) in an annular groove (48) provided in the rotor shaft (44).

10. Fan according to claim 9, wherein the retaining member (20) comprises at least one detent hook (21) which in the assembled state engages in the annular groove (48) provided in the rotor shaft (44).

11. Fan according to one or more of the preceding claims, wherein the motor is embodied as an electronically commutated external-rotor motor (103), whose rotor (34) comprises a rotor magnet (36), and which comprises a stator (22) with a stator laminations pack (26) which stator is located at least in areas radially within the rotor magnet (36).

12. Fan according to claim 11, wherein the rotor (34) is essentially arranged in a magnetic state of equilibrium relative to the stator laminations pack (26) in order to reduce or avoid a magnetic force acting in the axial direction between the rotor (34) and the stator (22).

13. Fan according to one of the preceding claims, wherein the pot-like part (6; 56) is formed in one piece with the housing (2) of the fan.

14. Fan according to one of claims 1 to 12, wherein the base part (46) connected to the bearing supporting tube (24) is formed in one piece with the housing (2) of the fan.

15. Fan according to one of the preceding claims, wherein the fluid-tight connection between the pot-like part (58, 70) and the base part (46) is formed by gluing, welding or other common connecting methods.

16. Fan according to one of the preceding claims, wherein the rotor (34) comprises a shaft (40) which is retained axially by a retaining ring (60) which engages in a circumferential groove (48) in the shaft (40).

## Revendications

1. Ventilateur, en particulier ventilateur d'appareil, lequel présente :
un moteur d'entraînement à induit extérieur (103), lequel présente un stator intérieur (22) et un rotor extérieur (34) séparé du premier par un entrefer (52) ;
un tube support de palier (24) relié à une pièce de base (46), sur lequel le stator intérieur (22) est disposé ;
une pièce en forme de pot (4, 56 ; 58, 70), laquelle
• est reliée à une extrémité à la pièce de base (46),
• forme une chambre annulaire (54) entourant le stator intérieur (22) de manière essentiellement ou sensiblement étanche aux fluides,
• s'étend par une paroi (56 ; 70) à la manière d'une gaine à travers l'entrefer (52) entre le stator intérieur (22) et le rotor extérieur (34) et
• est reliée à son autre extrémité de manière essentiellement ou sensiblement étanche aux fluides à l'extrémité du tube support de palier (24) opposée à la pièce de base (46).

2. Ventilateur selon la revendication 1, dans lequel l'autre extrémité est reliée de manière essentiellement ou sensiblement étanche aux fluides à l'extrémité du tube support de palier (24) opposée à la pièce de base (46) par une connexion à fiches.

3. Ventilateur selon la revendication 1 ou 2, dans lequel la pièce de base (46) est reliée (10') de manière essentiellement ou sensiblement étanche aux fluides au boîtier de ventilateur (2).

4. Ventilateur selon l'une ou plusieurs des revendications précédentes, dans lequel la pièce de base (46) est reliée (10') de manière essentiellement ou sensiblement étanche aux fluides au boîtier de ventilateur (2) par soudage par ultrasons (10').

5. Ventilateur selon l'une ou plusieurs des revendications précédentes, dans lequel la pièce en forme de pot (4, 56) présente un cordon de soudure (10) pour réaliser un assemblage par soudage.

6. Ventilateur selon l'une ou plusieurs des revendications précédentes, dans lequel il est prévu dans le tube support de palier (24) un évidement (14) dans lequel sont prévus une pièce d'écartement (18), un élément d'arrêt (20) destiné à retenir l'arbre (44) et une pluralité de paliers à roulement (16).

7. Ventilateur selon la revendication 6, dans lequel l'évidement (14) du tube support de palier (24) est formé à la manière d'un trou borgne (14).

8. Ventilateur selon la revendication 6 ou 7, dans lequel l'évidement (14) du tube support de palier (24) est formé à son extrémité fermée de manière à guider en direction radiale un élément d'arrêt (20) qui y est disposé.

9. Ventilateur selon l'une des revendications 6 à 8, dans lequel le rotor est formé comme un rotor extérieur (34) avec une cloche de rotor (39) à laquelle est fixé un arbre de rotor (40), et il est prévu entre cette cloche de rotor (39) et la bague intérieure d'un des paliers à roulement (16) un ressort de compression (44), lequel peut être comprimé lors du montage pour permettre un encliquetage de l'élément d'arrêt (20) disposé dans l'évidement (14) du tube support de palier (24) dans une rainure annulaire (48) prévue sur l'arbre de rotor (44).

10. Ventilateur selon la revendication 9, dans lequel l'élément d'arrêt (20) présente au moins un crochet d'arrêt (21) qui s'encliquette à l'état monté dans la rainure annulaire (48) prévue sur l'arbre de rotor (44).

11. Ventilateur selon l'une ou plusieurs des revendications précédentes, dans lequel le moteur est formé comme un moteur à commutation électronique à induit extérieur (103) dont le rotor (34) présente un aimant de rotor (36) et qui présente un stator (22) avec un paquet de tôles statorique (26), lequel stator se trouve au moins partiellement radialement à l'intérieur de l'aimant de rotor (36).

12. Ventilateur selon la revendication 11, dans lequel le rotor (34) est disposé essentiellement dans un état d'équilibre magnétique par rapport au paquet de tôles statorique (26) afin de réduire ou d'éviter une force magnétique agissant en direction axiale entre le rotor (34) et le stator (22).

13. Ventilateur selon l'une des revendications précédentes, dans lequel la pièce en forme de pot (6 ; 56) est formée d'une seule pièce avec le boîtier (2) du ventilateur.

14. Ventilateur selon l'une des revendications 1 à 12, dans lequel la pièce de base (46) reliée au tube support de palier (24) est formée d'une seule pièce avec le boîtier (2) du ventilateur.

15. Ventilateur selon l'une des revendications précédentes, dans lequel la fermeture étanche aux fluides entre la pièce en forme de pot (58, 70) et la pièce de base (46) est réalisée par collage, soudage ou d'autres méthodes d'assemblage courantes.

16. Ventilateur selon l'une des revendications précédentes, dans lequel le rotor (34) présente un arbre (40) qui est bloqué axialement par un circlip (60) qui s'encliquette dans une rainure périphérique (48) de l'arbre (40).
